(19) Europäisches Patentamt / European Patent Office / Office européen des brevets

(11) **EP 3 690 758 A1**

(12) **EUROPEAN PATENT APPLICATION**

(43) Date of publication:
05.08.2020 Bulletin 2020/32

(51) Int Cl.:
*G06N 3/08* (2006.01)     *F04D 15/00* (2006.01)
*G06N 3/00* (2006.01)     *G06N 5/00* (2006.01)
*G06N 20/20* (2019.01)     *G06N 3/04* (2006.01)

(21) Application number: 19168270.7

(22) Date of filing: 09.04.2019

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 04.02.2019  PT 2019115288

(71) Applicants:
• **INESC TEC - Instituto de Engenharia de Sistemas
e
Computadores, Tecnologia e Ciência
4200-465 Porto (PT)**
• **Aguas do Tejo Atlântico, S.A.
1300-254 Lisboa (PT)**

(72) Inventors:
• **Pérola Filipe, Jorge Miguel
4200-465 Porto (PT)**
• **Gomes de Sousa Bento Bessa, Ricardo Jorge
4200-465 Porto (PT)**
• **Mendonça dos Reis, Marisa
4200-465 Porto (PT)**
• **Neto Póvoa, Pedro Ricardo
1300-254 Lisboa (PT)**
• **Ramos Lourinho Alves, Rita Alexandra
1300-254 Lisboa (PT)**

(74) Representative: **Patentree
Edificio Net
Rua de Salazares, 842
4149-002 Porto (PT)**

(54) **METHOD AND DEVICE FOR CONTROLLING A WASTEWATER TANK PUMPING SYSTEM**

(57)     Method and device for controlling a wastewater tank pumping system comprising a level input of the wastewater tank and one or more control pump outputs for controlling variable outflow pumps, and an electronic data processor connected to said input and outputs, and configured for controlling said outflow pumps by using probabilistic wastewater tank inflow rate and executing a machine-learning method using pre-trained reinforcement-learning policy model for controlling one or more pump outputs, and pre-training said pre-trained reinforcement-learning policy parameters by emulating the level of the wastewater tank using historical inflow data and a random initial wastewater tank level.

**Fig. 1**

EP 3 690 758 A1

## Description

### TECHNICAL FIELD

The present disclosure relates to a method and device for controlling a pumping system, in particular a pumping system for a wastewater tank.

### BACKGROUND

Most of the processes that occurs in a wastewater treatment plant (WWTP) requires electrical energy for their operation, making WWTP an energy intensive consumer. Therefore, wastewater management sector is being pushed to optimize processes in order to reduce energy consumption without compromising its quality standards. Energy costs can represent a significant share of the global operational costs (between 50% and 60%) in an energy intensive consumer.

Recent advancements in smart water networks and internet-of-things technology create the conditions to apply data-driven optimization methods based on artificial intelligent techniques. Pumping is the largest consumer of electrical energy in wastewater treatment plant [5]. Thus, the optimal control of pump units can help the utilities to decrease operational cost.

Electrical energy gains can be achieved by operating with a higher wastewater level in order to reduce the relative height between the wastewater level and the next treatment tank. However, operating with a higher level also increases the risk of wastewater overflow, due to the uncontrollable and volatile rate of the wastewater intake from the previous treatment process.

Presently, most wastewater pumping stations are operated with fixed-level control rules. This sub-optimal solution has the same buffer (difference between the maximum height of the tank and the threshold) independently of the intake, seasonal or otherwise. In dry seasons there is a lower wastewater intake rate (WWIR), therefore the station could be operated with a higher level without impacting the safety of the operation. On the other hand, during wet seasons, which have a much higher and volatile WWIR, could, dynamically, reduce the wastewater level to accommodate extreme WWIR.

US Patent 9,719,241 B2 (GRUNDFOS HOLDING) teaches a rule-based method for operating a pumping system of a Waste Water Treatment Plant (WWTP) where pumps operation uses the load of the wastewater pumping network to optimize the water level in tanks, enabling a more efficient electric energy consumption. However, in most cases the mathematical model describing the physical system may not be available or is too complex to be integrated in a classical controller.

There is thus a need in the prior art for a method that is suitable to control a pumping system based in real-time data in order to improve energy efficiency and operational safety.

References

[1] R. Koenker, G. Bassett, Regression quantiles, Econometrica 46 (1978) 33-50.
[2] J. H. Friedman, Greedy function approximation: A gradient boosting machine, Annals of Statistics
[3] S. B. Taieb, R. Huser, R. J. Hyndman, M. G. Genton, Forecasting uncertainty in electricity smart meter data by boosting additive quantile regression, IEEE Transactions on Smart Grid 7 (2016) 2448-2455.
[4] J. Schulman, F. Wolski, P. Dhariwal, A. Radford, O. Klimov, Proximal policy optimization algorithms, arXiv:1707.06347 abs/1707.06347 (2017).
[5] J. Schulman, P. Moritz, S. Levine, M. I. Jordan, P. Abbeel, High-dimensional continuous control using generalized advantage estimation, CoRR abs/1506.02438 (2015).
[6] F. O. Kebir, M. Demirci, M. Karaaslan, E. Unal, F. Dincer, H. T. Aratc, Smart grid on energy efficiency application for wastewater treatment, Environmental Progress & Sustainable Energy 33 (2014) 556-563.
[7] Z. Zhang, A. Kusiak, Y. Zeng, X. Wei, Modeling and optimization of a wastewater pumping system with data-mining methods, Applied Energy 164 (2016) 303-311.

These facts are disclosed in order to illustrate the technical problem addressed by the present disclosure.

### GENERAL DESCRIPTION

This document discloses a method and device for controlling a pumping system to minimize electrical energy consumption comprising a forecasting model and a control based on reinforcement learning considering uncertainty forecasts for input rate and information collected by sensors.

Therefore, the present invention contrasts in particular with the current state-of-art solutions that use meta-heuristics [7] or fuzzy logic control [6]. Moreover, the disclosed inventions controls is focused, among other aspects, in operating the tank with a variable water level, instead of controlling the frequency increase/decrease rate as in [6].

It is disclosed a device for controlling a wastewater tank pumping system comprising a level input of the wastewater tank and one or more control pump outputs for controlling variable outflow pumps, and
an electronic data processor connected to said input and outputs, and configured for controlling said outflow pumps by executing a machine-learning reinforcement-learning method using probabilistic wastewater tank inflow rate and a pre-trained reinforcement-learning policy model for controlling one or more pump outputs,
wherein said reinforcement-learning model has been pre-trained by:
emulating the level of the wastewater tank using historical wastewater tank inflow rate data and random initial wastewater tank level.

A reinforcement-learning policy model is trained by adjusting the parameters of said model that optimize an objective function, typically, in the present disclosure, an objective function that rewards minimizing energy expenditure while avoiding wastewater tank overflow.

That is to say, it is disclosed a device for controlling a wastewater tank pumping system comprising a level input of the wastewater tank and one or more control pump outputs for controlling variable outflow pumps, and
an electronic data processor connected to said input and outputs, and configured for controlling said outflow pumps by executing a machine-learning reinforcement-learning method using a pre-trained reinforcement-learning policy model for controlling one or more pump outputs, wherein
said reinforcement-learning model has been pre-trained by:
emulating the level of the wastewater tank using historical inflow data and random initial wastewater tank level.

In an embodiment, the historical inflow data and/or the level input of the wastewater tank are sampled in irregular time periods.

In an embodiment, the historical inflow data and/or the level input of the wastewater tank are sampled in irregular time periods, during said pre-training of the reinforcement-learning policy model.

In an embodiment, said pre-training of the reinforcement-learning policy model comprises a reinforcement-learning method for training a control policy using a policy gradient, alternating between sampling data through interaction with environment emulated wastewater tank level and optimizing a surrogate objective function using stochastic gradient ascent.

An embodiment comprises a Proximal Policy Optimization, PPO, method.

In an embodiment, the PPO method comprises using a Generalized Advantage Estimation, GAE, method as advantage estimator for the Proximal Policy Optimization, PPO, method.

In an embodiment, the machine-learning reinforcement-learning method comprises a policy method having pre-trained reinforcement-learning policy model, said policy method comprising an artificial neural network method for inputting a state of the pumping system and for outputting a probability density function of the outflow pump variable set-point of each pump unit for sampling reinforcement-learning policy actions.

In an embodiment, the wastewater tank is emulated using a state of the pumping system comprising: current wastewater tank level, pump on/off status, current wastewater tank inflow, current outflow, and pump variable set-point.

In an embodiment, the pre-training said reinforcement-learning policy model comprises using forecasts of wastewater tank inflow for a predetermined number of time periods ahead and sampling reinforcement-learning policy actions from outflow pump variable set-points for each individual pump.

In an embodiment, the forecasts of wastewater tank inflow for a predetermined number of time periods ahead are probabilistic forecasts, in particular probabilistic forecasts of 25%, 50% and 75% quantiles.

In an embodiment, the said pre-training of the reinforcement-learning policy model comprises a reward function comprising optimization terms for: a wastewater reservoir level term for operating with the tank level within predetermined admissible level limits, and a power consumption term for decreasing power consumption of the pumping system.

In an embodiment, the said pre-training of the reinforcement-learning policy model further comprising a reward function comprising optimization term for: a pump variability term for avoiding intermittent on/off pump states and repeated adjusting of pump variable speed.

In an embodiment, the reward function is given by

$$r_t = c_1 \cdot r_{WWlevel_t} + c_2 \cdot r_{power_t} + c_3 \cdot r_{variability_t}$$

wherein $r_{WWlevel_t}$ is a positive predetermined value when the tank level is within predetermined admissible limits and is a negative predetermined value when the tank level is not within predetermined admissible limits;

wherein $r_{power_t}$ is a penalty value proportional to the power consumption of the pumping system;
wherein $r_{variability_t}$ is a penalty value proportional to change in outflow pump variable set-point;
wherein $c_1$, $c_2$, $c_3$ are adjustable weight coefficients for each term of the reward function.

It is also disclosed a method for controlling a wastewater tank pumping system comprising a level input of the wastewater tank and one or more control pump outputs for controlling variable outflow pumps, and an electronic data processor connected to said input and outputs, and said method comprising:

controlling said outflow pumps by executing a machine-learning method using pre-trained reinforcement-learning policy model and using probabilistic wastewater tank inflow rate, and
previously pre-training said reinforcement-learning policy model by:
emulating the level of the wastewater tank using historical inflow data and random initial wastewater tank level.

It is also disclosed a non-transitory computer-readable storage medium including program instructions for implementing a device for controlling a wastewater tank pumping system, the program instructions including instructions executable by an electronic data processor to carry out the disclosed methods.

## BRIEF DESCRIPTION OF THE DRAWINGS

The following figures provide preferred embodiments for illustrating the disclosure and should not be seen as limiting the scope of invention.

**Figure 1:** Schematic representation of an embodiment of a pumping system according to the disclosure, of a wastewater pumping station with 5 units of 110 kW.

**Figure 2:** Schematic representation of an embodiment of the disclosed reinforcement Learning method and device applied to wastewater pumping station.

**Figure 3:** Schematic representation of an embodiment of the disclosed data-driven control method - initial learning stage.

**Figure 4:** Schematic representation of an embodiment of the disclosed data-driven control method - operational stage.

**Figure 5:** Schematic representation of results from an embodiment of the disclosure for: Number of alarms (wastewater level above 7.2m) with and without WWIR forecasts.

**Figure 6:** Schematic representation of results from an embodiment of the disclosure for predictive control avoiding an alarm.

**Figure 7:** Schematic representation of results from an embodiment of the disclosure for an alarm triggered due to an episode start.

**Figure 8:** Schematic representation of results from an embodiment of the disclosure for the electrical energy consumption with and without WWIR forecasts.

**Figure 9:** Schematic representation of results from the disclosure for the number of alarms versus electrical energy consumption in two embodiment scenarios.

**Figure 10:** Schematic representation of measured time intervals between data records according to an embodiment of the disclosure.

**Figure 11:** Schematic representation of model episodic training of the control method according to an embodiment of the disclosure.

## DETAILED DESCRIPTION

The work described in this document involves a method and device for controlling a pumping system, in particular to control the tank water level in a wastewater treatment plant. The method and device comprise a data-driven forecasting module and, unlike the prior art based on physical and/or mathematical models, the disclosure is ready to adapt in real-time the control policies to the changes that occur in the system (e.g. degradation). The disclosure implements predictive control which has the ability to anticipate the incoming intake and to adjust the reservoir buffer accordingly.

The present disclosure is able to decrease the electrical energy consumption of a pumping system in 16% when compared with the standard approach (e.g. fixed-level control methods). Of note, energy consumption corresponds to around 57% out of the total operational costs (without considering human resources).

Moreover, the data-driven forecasting module comprised in the method and device herein described enables a safer and smoother control of the tank water level, reducing the number of alarms in 97%.

The disclosed data-driven method and device aims at optimizing the energy consumption of a wastewater pumping station (WWPS) by optimally defining the operating set point for each variable-speed pump unit.

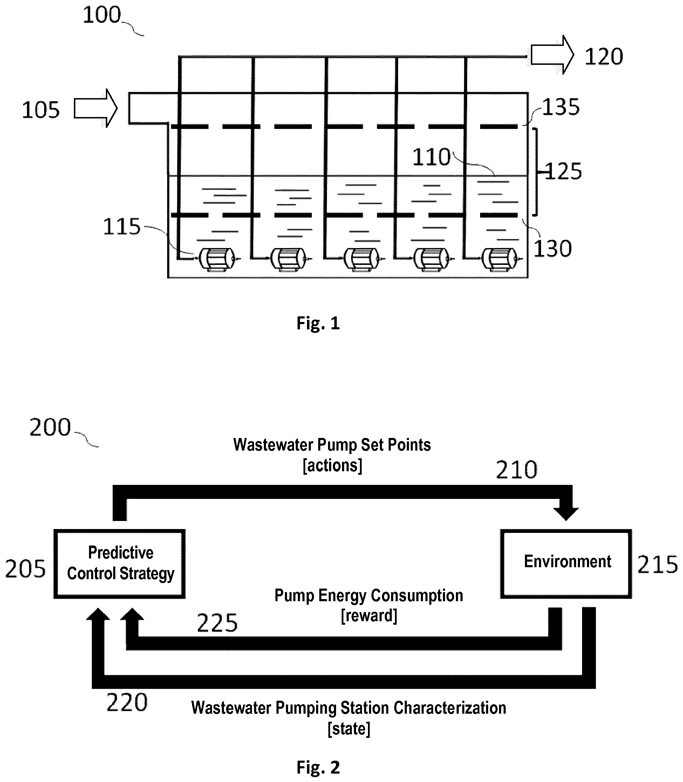

The control of wastewater pumping stations in a WWTP (Fábrica da Água de Alcantara, Portugal) will be used as example. As depicted in Fig. 1, the example is focused on a WWPS 100 that is supplied with water intake input 105 and controls the water level in the WWPS 110 using at least one pump unit 115. The standard pump control method of the WWPS 100 consists in operating at fixed water level 110 and turning on/off the pumps 115 when the measured water level 110 is below/above the predefined value. The water intake 105 is not controllable and the output wastewater for the secondary treatment 120 is controlled by the pumping unit's operation 115. Wastewater level 110 control is constrained by the reservoir buffer 125, which is limited by a minimum level 130 (e.g.3 meters) and a maximum level 135 (e.g. 8 meters).

In order to predict the incoming wastewater incoming rate (WWIR) 105 and to be able to automatically adjust the reservoir buffer 125 accordingly, the method and device disclosed herein comprise two main parts according to an embodiment: i) Artificial Intelligence (AI) control algorithm based on Reinforcement Learning (RL) and ii) WWIR forecasting.

Probabilistic forecasts of the WWIR are generated and used as one of the inputs of the AI control algorithm, in order to provide not only a set of quantiles indicating the WWIR but also providing the control strategy with information about forecast uncertainty.

Reference is made to Fig. 2 to illustrate the AI control algorithm based in RL. The AI control algorithm 200 relies on RL, that unlike supervised learning (SL) that uses a tangible path to improve the model (loss function), the learning process in RL is made by evaluative feedback, which translates in knowing how well you achieved your goal (reward). For each learning instant, the AI control algorithm uses as input a set of variables that are able to provide a snapshot of the environment and these values are used to sample an action 210 and apply it to the environment 215. This action will result in a state transition that will produce a reward 225. Through several interactions with an environment 215, the control method 205 will learn the optimal action or course of actions that maximize the expected reward 225. The state 220 is described as a set of variables characterizing the WWPS (e.g. tank level, wastewater intake rate forecasts, pumps available and its current operational set-point, etc). Actions 210 extracted from the control method 205 are the set-point for each pump unit. The reward 225 that provides feedback on the performance of the model is the pumps' electrical energy consumption.

When dealing with physical systems composed by expensive mechanical components and in continuous operation, it is impossible to directly implement an AI control method that relies on thousands of interactions with the system to learn the optimal control method. Therefore, the disclosure comprises a two-stage or two-part method: i) initial learning and ii) operational stage.

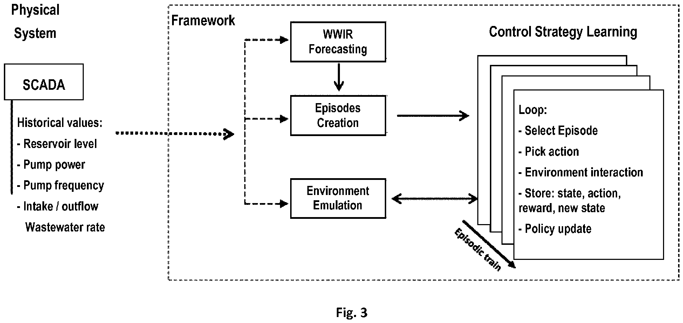

Reference is made to Fig. 3 to depict the initial learning stage of the AI control algorithm. Historical data is collected from the WWPS Supervisory Control and Data Acquisition (SCADA) system, containing information about the pumps (active power and frequency) and the wastewater tank (reservoir level, WWIR and outflow rate). This data is used in three modules: WWIR forecasting, episodes creation, and environment emulation.

The forecasting module uses the historical time series of WWIR in order to produce probabilistic forecasts, as will be further described.

The WWPS operation is preferably continuous. However, in order to maximize the historical information used to train the control algorithm, the complete time series was preferably divided into a set of episodes with unequal length. Each step represents 2-minute discrete interval of the WWPS and has the following information: pumps online, current pump set-point, WWIR, original wastewater level and WWIR forecast for 20 steps ahead (40 minutes). At the start of each episode, the initial water level is randomized in order to increase the diversity of the learning dataset. These episodes are then sampled randomly and used in the learning process of the RL control.

Typically, the randomization of the initial water level can be based on a minimum and a maximum tank level. Typically, the randomization of the initial water level can be based on historical wastewater tank levels. For example, it can be obtained by a random function, for example having a uniform distribution, between zero (empty wastewater tank level) and a maximum wastewater tank level. Typically, the randomization of the initial water level can be based on the wastewater tank capacity. For example, it can be obtained by a random function, for example having a uniform distribution, between zero (empty wastewater tank level) and the maximum wastewater tank capacity.

The environment emulation module applies statistical learning algorithms to the historical data in order to emulate the physical processes: i) relation between pumping power and outflow rate and ii) modelling of the reservoir level deviation as a function of the WWIR and outflow rates. Both methods are further detailed.

To summarize, from the historical data collected via SCADA system the following information is preferably created: i) WWIR probabilistic forecasts; ii) data-driven models that emulate the physical environment; iii) episodes combining historical data and forecasts.

The learning process preferably uses this information in the following way:

Select an episode
Randomize the initial water level
For each step of the episode:

Collect the state characterization
Sample an action from the control method
Apply the action to the emulated environment
Observe the state transition
Collect the reward
Store the vector [state, action, reward, new state]

Update the control method

After preferably thousands of episodes, the AI control algorithm will learn which action (or set of actions), for a given state, results in the higher expected reward in the long term.

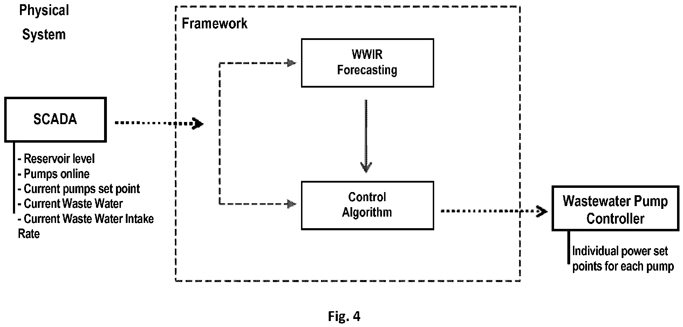

Reference is made to Fig. 4 to illustrate the operational stage of the AI control algorithm according to an embodiment. After the initial learning stage, the control method is optimized and ready to be integrated with the physical system. However, due to inconsistencies between the emulated and physical system, preferably some interactions with the real environment are necessary to calibrate the AI control algorithm. During the operational stage, the overall process, as depicted in Figure 4, is preferably the following:

Collect the state characterization from the SCADA
Generate the WWIR probabilistic forecasts
Sample an action from the control method
Apply the action to the physical environment
Observe the state transition
Measure the power consumption (reward)
Store the vector [state, action, reward, new state]
Update the control method

As previously referred, WWIR forecast is a feature of the disclosure. In the following paragraphs, it is described a multi-step ahead forecasting method for the WWIR, considering both point (i.e., expected value) and probabilistic representations according to an embodiment. This preferably requires the use of statistical learning algorithms, as well as the creation of additional features from the raw dataset (i.e. feature engineering) and select a subset of explanatory variables.

Firstly, feature engineering must preferably be explained as an essential part of the WWIR forecast process. An important characteristic of the time series and with impact in the feature creation is that measurements are collected with irregular sampling frequency. According to an example of the disclosure, about 68.9% of the observations are sampled with 2 minutes interval, followed by 3 minutes sampling with 16.1%, and 8.5% of observations above 5 minutes. This is particularly challenging for including lagged variables (i.e., past values of the time series) in the forecasting model, according to an autoregressive framework. To overcome this limitation and enable the inclusion of lagged variables, a re-sampling is performed over a uniform time interval. In this case, it was re-sampled to the most common observed time frequency, which was 2 minutes.

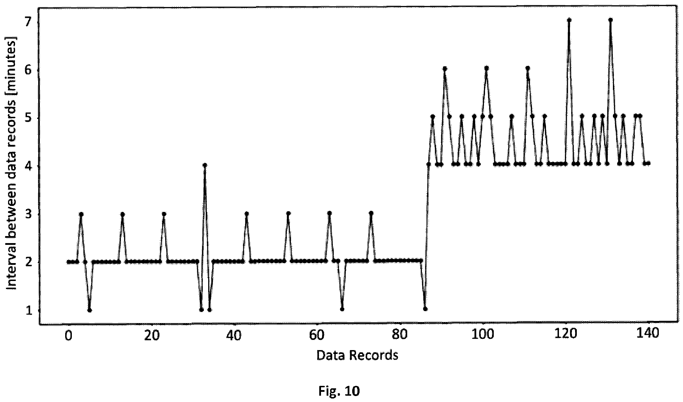

See also fig. 10 for an example of the time interval between data records showing said irregular sampling frequency. The control algorithm was developed to operate the wastewater pumping facility in "real-time". It receives the state of the system from the SCADA (pumps online, current set-point, tank level, etc) and defines what is the individual operating set-point for each individual pump. Furthermore, the control algorithm is robust enough to deal with some variability in the interval between consecutive collections of the SCADA data. In Figure 10 is depicted an example of the variable data collection time of the system state. As can be seen in a small window of 140 records, totalizing almost 7 hours, the interval between records ranged from one minute to seven minutes. During this time the algorithm was able to perform adequately.

The plot of the autocorrelation function computed over the re-sampled time series provides the correlation as a function of the lags when comparing the original series with the lagged version of itself. observed, the time series exhibits significant serial correlation with smaller lags, and a peak is observed around *lag* = 720. The latter indicates a daily seasonality, since *lag* = 720 with 2 minutes resolution corresponds to the previous day. Based on this information, lagged features were added to the model, $W_{t-1},..., W_{t-l}$ where *l* is the number of lags to be determined, as well as the WWIR from the same timestamp of the previous day, denoted as $^{24H}W_t$.

As the average WWIR strongly depends from the period of the year and period of day, calendar variables, like the hour of the day, month and weekday should be included the forecasting model. In addition to the classical lagged and calendar variables, from the raw variables dataset it is possible to derive additional features. Considering the WWIR time series represented by $W = \{W_1...,W_n\}$ and its timestamp represented by $\{t_1,...,t_n\}$, the following new features were calculated as follows:

Change over Time (CoT): $c_m = (W_{m-1}-W_m)/(t_{m-1}-t_m)$
Growth or Decay (GoD, or GorD): $(W_{m-1}-W_m)/W_m$

In summary, the features considered for the forecasting model are: i) calendar variables such as hour, weekday and month; ii) lagged variables close to launch time $t$ -$W_{t-1},...,W_{t-l}$-and 24 hour lag -$^{24H}W_t$, iii) difference series translating change -$CoT_{t-1}$- and slope growth or decay -$GoD_{t-1}$. Note that except for the calendar variables, all the features are build backward-looking, in the sense that each point of the time series only depend on past values.

Secondly, **WWIR forecast** model is explained. The objective of the forecasting model is to obtain a model that approximates an unknown regression function $W = f(\mathbf{x})$, where $\mathbf{x}$ is the set of features described in the previous section. In order to produce multi-step ahead forecasts, a model is fitted for each lead-time $t + k$ as follows:

$$\hat{q}_{t+1} = f_1(W_{t-1},...,W_{t-l},hour,wday,month,CoT_{t-1},GoD_{t-1}, {}^{24HW}_{t+1})$$

$$\hat{q}_{t+2} = f_1(W_{t-1},...,W_{t-l},hour,wday,month,CoT_{t-1},GoD_{t-1}, {}^{24HW}_{t+2})$$

$$...\hspace{6cm}(1)$$

$$\hat{q}_{t+k} = f_k(W_{t-1},...,W_{t-l},hour,wday,month,CoT_{t-1},GoD_{t-1}, {}^{24HW}_{t+k})$$

where *l* is the number of lags, $t+k$ is the lead-time horizon and $\hat{q}_{t+k} \equiv \hat{q}_{t+k}^{(\alpha i)}$ denotes the forecast for the quantile with nominal proportion $\alpha_i$ issued at time $t$ for forecast time $t+k$. In order to produce these forecasts, *f* is fitted for each step ahead with information available at time $t$ for the $k$ horizons.

In this work, two different statistical learning algorithms were considered for modelling function *f*:

Linear Quantile Regression (LQR) [1], which is a linear model analogous to multilinear regression but with the possibility to adjust a specific model to generate a conditional quantile estimation.
Gradient Boosting Tress (GBT) [2], which is an ensemble of regression trees as base learners and presents a high flexibility in accepting different types of loss functions. In this work, the quantile loss function is used to generate probabilistic forecasts.

Thirdly, the quality of the WWIR forecasting is assessed using the forecasting skill metrics that will be further presented. The forecasting skill of the wastewater inflow was evaluated for both point and probabilistic forecast. The quality of the probabilistic forecast was access with the following metrics: calibration, sharpness and continuous rank probability score (CRPS).

Calibration measures the deviation between empirical probabilities (or long-run quantile proportions) and nominal probabilities. This difference is also called bias of the probabilistic forecasts and is usually calculated for each quantile nominal proportion ($\tau$). Sharpness quantifies the degree of uncertainty in probabilistic forecasts, which numerically corresponds to compute the average interval size between two symmetric quantiles (e.g., 10% and 90% with coverage rate y equal to 20 %).

CRPS is a unique skill score that provides the entire amount of information about a given method's performance and encompasses information about calibration and sharpness of probabilistic forecasts. The CRPS metric was adapted to evaluate quantile forecasts, as described in [3]). Point forecasts, i.e. 50% quantile in this work, were evaluated with the classical Mean Absolute Error (MAE). Lastly, the quality of the WWIR forecasting is determined using the following forecasting skill methods.

The following pertains to benchmark models. Typically used in the literature, the persistence model assumes that the forecast for $t + 1$ is equal to the value observed in the previous time step $t$. Due to the strong correlation between time instants $t$ and $t - 1$, a naive algorithm such as this one can be very hard to beat in terms of forecasting performance, especially for very-short time horizons and in dry periods with low variability. In addition to persistence, LQR model conditioned to the period of the day (i.e., hour) is also considered as a second benchmarking model. With this benchmark method, we allow the distribution to change for each period of day. This method will be denoted *CondbyHour.*

The following pertains to variables importance. This subsection evaluates whether or not the input features improve the forecasting skill, measured with the MAE and CRPS. This evaluation is performed only for the first lead time ($t$+1) using the LQR. The choice on the number lags was made by calculating the MAE of different models having different numbers of lags as explanatory variables (parameter $l$), using an out-of-sample period. The results showed that it is possible to see that MAE stops decreasing after $l = 8$. Therefore, variables $W_{t-1},..., W_{t-8}$ are preferably included in the final model.

Additionally, the improvement obtained by including variables *CoT, GoD,* and $^{24H}W$ was quantified. Table 1 summarizes the feature selection results. Each row is a model, and each cell in the row is filled if the corresponding column (variable) is included in the model. The last two columns are the forecast performance obtained with the corresponding model. The performance metrics are negatively oriented, meaning small values are better.

Table 1: Forecasting skill for different combinations of features.

| Model | Calendar | | | Lags | $24HW5,t$ | CoT | GorD | Evaluation Metrics | |
|---|---|---|---|---|---|---|---|---|---|
| | hour | wday | month | | | | | MAE | CRPS |
| M1 | x | | | | | | | 1428 | 1382 |
| M2 | | | | | x | | | 1077 | 1096 |
| M3 | | | | x | | | | 487 | 640 |
| M4 | x | x | x x | | | | | 1153 | 1109 |
| M5 | x | x | x x | | | X | | 1118 | 1087 |
| M6 | x | x | x x | | | | x | 1117 | 1086 |
| M7 | x | x | x | x | x x | | | 472 | 621 |
| M8 | x | x | | x | x x | X | | 356 | 538 |
| M9 | x | x | | x | | | x | 361 | 542 |
| M10 | x | x | | x | | X | x | 353 | 535 |

The model conditioned to the hour of the day (M1) shows the worst performance with 1428 $m^3/h$ of MAE. Adding the other calendar variables (M4), the error is improved with respect to M1. But, when considering only the combination of calendar variables (M4) and *CoT* or *GorD* variable (M5 and M6), these models do not offer competitive performance in comparison with the inclusion of lagged information (M2 and M3). This is clearer with model M3. The combination of Lags ($t$-1...t-8) and measurement from the previous day, results in a minor decrease of both metrics (model M7). Having *CoT* or *GorD* with lagged variables (M8 and M9) show similar errors $CRPS = 356 m^3/h$ and $CRPS = 361 m^3/h$ respectively. But, when both are added in M10, a further error reduction is attained with $CPRS = 353 m^3/h$. The best model is achieved with all the features (M10). In overall, the inclusion of the lagged variables provides the largest error reduction. In conclusion, all features discussed are considered relevant and preferably included in the final model.

The GBT model presents the best performance in both metrics, following LQR in second place. The probabilistic forecasts from this model are used in predictive control strategy of the following sections.

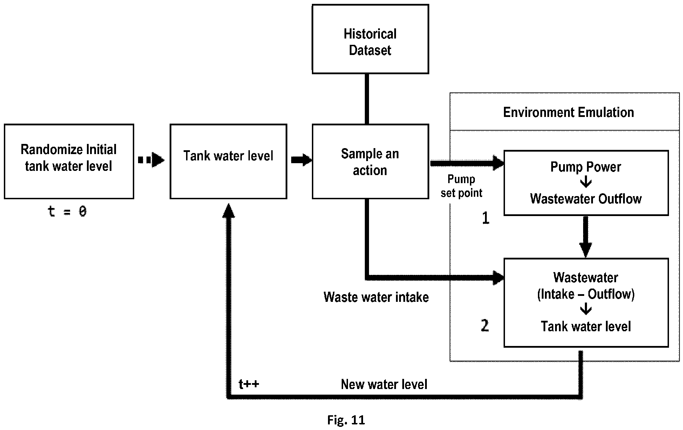

Reference is made to Fig. 11 to illustrate the episodic training of the control policy with the emulated environment in the context of the process modelling and predictive control.

The training process is made through thousands of interactions with a simulated environment, which is built on top of two main modules wastewater outflow rate model and wastewater tank level model.

With the operational set-point of each individual pump (selected by the control policy) and the current level of wastewater of the tank, it is possible to estimate the amount of wastewater that will be pumped from the tank. The statistical learning algorithm GBT (Gradient Boosting Trees) was used to model this. For this model the following input features were used:

> Individual pump power set-point [float - kW]
> Active pumps [binary]
> Number of pumps active [integer]
> Total power consumption [float - kW]
> Tank water level [float - meters]

When optimizing parameters of a statistical model, the objective is to minimize a loss function. In this particular case, the loss function is the absolute difference between the modelled WWOR and the realized historical value. However, and even with the pre-processing made, blindly optimize every hyper-parameter of the model presented some incoherent results, zones in which less power leads to more wastewater pumped. If the RL algorithm discovers an operational range like these, it will exploit this zone over and over leading to a different performance when moving from the simulation environment to the operational deployment. The hyper-parameters of the GBT model may be tweaked to avoid this issue. Namely, decreasing the maximum depth of the individual regression estimators and limiting the number of nodes in the gradient boost tree.

For the wastewater tank level model, with information about the amount of WWIR entering the tank (data acquisition by sensor) and knowing the amount of wastewater being pumped as result of the pumps operation (from the wastewater outflow model), it is possible to model the change in the tank level. Given the physical characteristics of the tank, this relationship can be modelled using a multi-linear regression model. The features used as input were: current wastewater tank level, WWIR, wastewater outflow rate and the difference between the intake and outflow.

As mentioned there may be a variable frequency in data records. This complete data-driven framework for energy optimization on pumping stations relies on historical records for model fitting. The available dataset according to an embodiment does not have the same frequency of acquisition, ranging from 2 to 8 minutes between records. Nevertheless, the algorithm is robust to these fluctuations.

During the fitting stage, training data with variable frequency is used. Once a set-point for the pumps is set, it is kept constant until a new data reading. This is equivalent to having communications offline, while the wastewater inflow and pumping continues. Situations can happen where an overflow occurs due to the unavailability of control, resulting in a severe penalty (included in the reward). After several interactions, the control policy develops a more conservative, and risk averse, strategy to accommodate these sampling issues and avoid overflow.

As mentioned before, the RL methods require thousands of interactions with the environment in order to find the action or course of actions that maximize the expected reward. Since it is impractical, from an implementation point of view, to learn and interact from scratch directly with the physical system, it is preferable to emulate the environment. This emulation relies preferably, as described below, in the wastewater outflow rate and in the wastewater level of the tank.

According to an embodiment, at the start of the episode, the initial wastewater level of the tank is preferably randomized, while for the following steps the water level is a result of the actions defined by the control policy. The following processes occur preferably cyclically until the maximum number of steps in the episode is reached. An action is sampled from the stochastic control policy that comprises the individual operating set-point of all the pumps and applies them to the emulated environment. The first model uses this information to obtain the resulted wastewater outflow rate, which combined with WWIR (gathered from the historical dataset) allows the second model to obtain the tank wastewater level for the next instant. This new value is used at the start of the loop as the actual wastewater level and the cycle is repeated.

The following presents details of the models used to emulate the physical system, which are based in statistical learning algorithms. Alternatively, the physical model can be measured for providing the physical parameters necessary for the emulation. For example, with the operational set-point of each individual pump (selected by the control policy) and the current level of wastewater of the tank, it is possible to estimate the amount of wastewater that will be pumped from the tank. A statistical learning algorithm can be used (for example GBT) to model this relationship between pump power and wastewater outflow.

For this model, for example, the following input features could be used: individual pump power set-point [float - kW], active pumps [binary], number of pumps active [integer], total power consumption [float - kW], tank water level [float - meters]. This allows modelling the pumping station physical environment simply by using historical data. In particular, establishing the relationship between pumping power, outflow and tank level is very relevant for characterizing the pumping station physical environment.

The control policy preferably relies on RL to optimize the operation of the WWPS. A standard RL setup consists of an agent interacting with an environment $E$ in discrete timesteps. At each timestep, the agent receives an observation $s_t$ (characterization of the state), takes an action $a_t$ and receives a scalar reward $r_t(s_t, a_t)$.

The agent behaviour is defined by a policy $\pi_\theta(a|s_t)$ which samples an action given the current state and the policy parameters $\theta$. The aim of the agent is to maximize the sum of expected future rewards discounted by

$$\gamma: \mathbb{E}_\pi[R_t] = \mathbb{E}[\textstyle\sum_{i \geq 0}^{\infty} \gamma^i r(s_{t+i}, a_{t+i})].$$

The RL algorithm used to train the control policy is preferably the Proximal Policy Optimization (PPO) [4]. PPO is a policy gradient method, which alternates between sampling data through interaction with the environment and optimizing a surrogate objective function using stochastic gradient ascent.

The classical PPO algorithm uses an advantage estimator based on the Generalized Advantage Estimation (GAE) [5], as described in Equation 2, where $V(s_t)$ is the estimated value at the state s and instant $t$, and $\gamma$ is the discount factor. To calculate this advantage, it is necessary to collect experiences for $T$ time steps and calculate the discounted advantage for all these time steps, so with $T$ = 200 the advantage at the first time step will be composed by all the discounted rewards until the last time step. This can lead to volatile results due to the credit assignment problem. In this work, we used a truncated GAE, so only a small part of all the experiences receive the discounted advantage, in order to better account the characteristics of the state vector. Since the WWIR forecasts used have a lead time of 20 steps ahead, it makes sense to limit the discounted advantage to the same interval, i.e. $T$ = 20.

$$\hat{A}_t = -V(s_t) + r_t + \gamma r_{t+1} + \cdots + \gamma^{T-t+1} r_{T-1} + \gamma^{T-1} V(s_T) \quad (2)$$

The policy trained by PPO is represented by a neural network (NN) with two layers of 64 neurons and using the rectified linear unit as the activation function. The NN receives as input the state vector and outputs the parameters of a probability density function. Since the actions selected by the RL agent are within 0 and 1, corresponding to the set-point of each pump unit, a multivariate Beta distribution was used. Therefore, the NN output will be a pair of parameters from the Beta distribution ($\alpha$ and $\beta$) for each action. For this stochastic beta policy, only the cases where $\alpha, \beta > 1$ were considered, since solely in this domain the distribution is concave and unimodal. During the training stage, actions are sampled from the probability density function (PDF)(Eq. 3) in order to provide exploration, while during evaluation the stochasticity is removed and actions are selected as the mean of the PDF (Eq. 6).

$$Beta_{PDF} = \frac{x^{\alpha-1}(1-x)^{\beta-1}}{\mathrm{B}(\alpha,\beta)} \quad (3)$$

$$\mathrm{B}(\alpha,\beta) = \frac{\Gamma(\alpha)\Gamma(\beta)}{\Gamma(\alpha+\beta)} \quad (4)$$

$$\Gamma(z) = \int_0^\infty x^{z-1} e^{-x} dx \quad (5)$$

$$Beta_{mean} = \frac{\alpha}{\alpha+\beta} \quad (6)$$

The state representation is preferably a combination of the current snapshot of the environment and the WWIR forecasts presented above, namely:

Current tank level
Pumps online (excluding units in maintenance or offline), which is a binary vector with the pump status
Current WWIR
Current set point for each individual pump
Probabilistic forecasts of WWIR: 25%, 50% and 75% quantiles for 20 steps ahead

The actions sampled from the control policy are the power set-points for each individual pump unit.

The reward function quantifies the performance of the control policy, acting as the only feedback that allows the control policy to learn the correct action for a given state.

Equation 7 defines the reward function used in this problem. As observed, the reward is divided into two terms: i) tank level and ii) power consumption. $c1$ and $c2$ are constants which give relative weight to each one of the terms and are ordered according to the objective of the problem. Since it is more important to avoid overflow of the tank than to decrease the energy consumption: $c1 > c2$. The following subsections detail both parcels of the reward function.

$$r_t = c_1 . r_{WWlevel_t} + c_2 . r_{power_t} \qquad (7)$$

It is important to stress that the values $c1$ and $c2$ should be defined by the end-user according to its requirements.

Wastewater Reservoir Level, $r_{WWlevel_t}$

The first term rewards the policy for operating with the tank level within the admissible limits. If the level is between 3m and 7.2m, a reward of $R^+$ is given, otherwise a reward of $R^-$ is issued. An empirical analysis showed good results with $R^+ = 3$ and $R^- = -600$. It is relevant to stress that it is important to have a much severe penalty than a reward, since the first objective is to operate within the tank limits.

Mathematically it is translated into:

$$r_{WWlevel_t} = \begin{cases} R^+, h \in [3.0, 7.2] \\ R^-, h \in ]0, 3.0[ \vee h \in ]7.2, 8.0] \end{cases} \qquad (8)$$

Power Consumption, $r_{power_t}$

Since the control strategy aims to decrease the power consumption of the WWPS, for each timestep $t$ a penalty proportional to the total installed capacity of the pumping station is applied as follows:

$$r_{power_t} = \frac{\sum_i p_{i,t}}{p_{inst}} \qquad (9)$$

where $p_{i,t}$ is the power consumption of the i-th pump for timestep $t$ and $p_{inst}$ the total capacity of the pumping station.

According to an embodiment of the disclosure, a further term is incorporated into the reward function in order to avoid the excessive wear and tear resulting from both the intermittent on/off state, but also the constant adjusting of the variable speed of the mechanical wastewater pumps. The reward function quantifies the performance of the control algorithm. A single scalar acts as the only feedback that allows the control policy to learn the correct action for a given state. This scalar is the result of the following function:

$$r_t = c_1 . r_{WWlevel_t} + c_2 . r_{power_t} + c_3 . r_{variability_t}$$

As observed, the reward is divided into three terms:

WW tank level - rewards the policy for operating with the WW tank level within the admissible limits, otherwise a heavy penalty is applied:

$$r_{WWlevel_t} = \begin{cases} R^+, h \in [3.0, 7.2] \\ R^-, h \in ]0, 3.0[ \vee h \in ]7.2, 8.0] \end{cases}$$

Energy consumption - since the control aims to reduce the energy consumption, for each optimization instant a penalty is given in proportion to the current power consumption and the total installed capacity:

$$r_{power_t} = \frac{\sum_i p_{i,t}}{p_{inst}}$$

Pump variability - to avoid the excessive wear and tear resulting from both the intermittent on/off state but also the constant adjusting of the variable speed of the mechanical wastewater pumps a penalty is awarded proportional to the set-point change from the previous optimization period to the current:

$$r_{variability_t} = \frac{\sum_i |P_{i,t} - P_{i,t-1}|}{P_{inst}}$$

Variables $c_1, c_2, c_3$ are coefficients which give adjustable weight to each part of the reward function. These could be calculated based on estimations of the cost of each part or defined together with the decision agent.

The training process, i.e. the RL agent learning process, consists on performing a set of actions for several iterations, using the simulated environment and two sets of episodes: one for training and the other to continuously assess the performance of the control policy.

The policy NN is initialized by assigning random values to its weights and bias. Then an iterative learning process takes place until the predefined number of iterations is reached. Each iteration is divided into two phases: training and test.

The training process consists on randomly select an episode and allowing the RL agent to interact with the simulated environment for $T$ timesteps. In this stage, both the policy and the environment are stochastic in order to provide exploration. Since the policy is represented by a beta distribution, the actions are obtained taking samples from the PDF. In the environment, the stochasticity is provided by randomizing the water level in the tank at the start of each episode. In each interaction (step) the control policy receives as input the state of system and chooses an action representing the operational set-point for each one of the pumps. The action is applied to the environment which leads the system to a new state and the emission of a reward. For each step the state transition vector (observation, action, reward) is collected, and this episodic rollout ends at the terminal stage of an episode (either by reaching the maximum number of steps or by getting an alarm). Afterwards, the collected vector is used to train the RL agent using the PPO algorithm, altering the policy parameters (weights and bias of the neural network).

The recently updated policy is then used in the second stage and is used to assess its performance in a small subset of the available testing episodes. In this stage the stochasticity is removed to allow reproducibility between iterations, thus leading to a fairer comparison and analysis. The statistics collected during this stage (average reward, number of alarms and energy consumption) are used to evaluate the learning process.

This concludes an iteration of the learning process and the method restarts the collection of the transitions vector.

The following pertains to experimental results. The energy optimization strategy was applied to the WWTP (Fábrica da Água de Alcantara, Portugal) used as a preferential test embodiment. Using the historical records collected by the station's SCADA system, a set of episodes were created for evaluating the control performance, i.e. 80% were chosen to train the RL agent while the remaining 20% were used as the test set. Due to some missing values in the original dataset, the episodes have variable length in order to maximize the number of continuous steps. A minimum of 200 timesteps was enforced per episode, while the maximum was left uncapped, leading to some episodes with more than 3000 timesteps. Each episode contains information about the number of online pumping units (excluding the ones in maintenance or unavailable), current WWIR and WWIR forecasts. This information is discretized in 2-minute steps. The numerical results presented below were obtained by applying the RL agent to all the episodes of the testing set, which comprises 65 episodes, encompassing more than 64,000 steps for a total of 90 days of data.

Four scenarios were considered to measure the performance of the data-driven optimization strategy: Current operating rules, Strategy without WWIR forecasts, Strategy with WWIR forecasts, and Strategy with perfect WWIR forecasts (i.e. observed values). The first scenario is used as the benchmark model since it corresponds to the historical records of the current operation of the WWPS. The other three scenarios aim to assess the improvement of the RL agent in comparison with current control operation and also to compare the predictive aspect of RL agent by evaluating an agent with access to WWIR forecasts. The perfect forecast scenario establishes an upper bound for the electrical energy saving gains.

The following sections show a set of numerical analysis considering these four scenarios. It is important to underline that the RL learning process has an inherent instability. As mentioned before, for each learning iteration the control policy is applied to the test set and the relevant performance indicators are collected. Furthermore, instead of considering the best iteration of all the learning process, it is considered the last 5000 iterations to smooth the variability. The results are presented as a set of quantiles (25%, 50% and 75%) to better illustrate the variability in performance from iteration to iteration.

The following pertains to improvement in the Number of Alarms. The WWPS has preventive measures to avoid spillage of wastewater during periods of extreme WWIR. There are two critical alarm levels, the first at 7.2 meters initiates a preventive action that re-directs a share of the incoming wastewater directly to the output of the facility and skipping some treatment phases. The second alarm occurs at the 8 meters when the tank reaches its maximum capacity and overflow occurs.

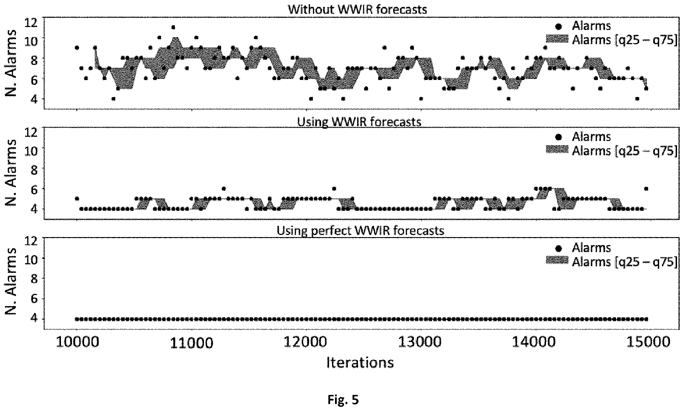

This section studies the number of alarms triggered in the four scenarios under evaluation. Results are depicted in Fig. 5 and Table 2.

Fig. 5 shows the number of alarms registered when operating the WWPS using the RL control for the past 5000 iterations of the training process. The depicted dots represent the number of alarms while the shaded area indicates the 25% and 75% quantiles of the same record. The top plot shows the control results without WWIR forecasts in the state vector, the middle plot shows the predictive control with probabilistic WWIR forecasts, and the bottom one indicates the alarm performance considering perfect information of WWIR. Without WWIR forecasts the number of alarms ranges from 4 to 11, while with the predictive control the number of alarms is kept between 4 and 6, and, as seen in the plot, with much less variability. With perfect forecast (or knowledge) for the WWIR, the predictive control maintains an alarm number of 4. As will be discussed later, 4 alarms are the minimum possible number, since these alarms occurred at the start of the episode, therefore unavoidable for the RL control strategy

Table 2 shows a comparison between the RL control strategy and the current operational procedure. Considering the episodes under evaluation, a total of 1671 occurrences were originally registered of wastewater level above the first alarm trigger (7.2 meters). Despite the previous numbers, the second alarm was never triggered, registering a maximum level of 7.98 meters.

The RL approach was able to significantly reduce the number of alarms triggered, for both the predictive and non-predictive strategies. Without WWIR forecasts, the RL strategy registered an average of 7 alarms, and by including the probabilistic forecasts this number decreased to 4.55 alarms in average, for the last 5000 training iterations.

Table 2: Number of reservoir level alarms triggered.

|  | Alarms 7.2m | | | Alarms 8m |
|---|---|---|---|---|
|  | q25% | q50% | q75% | n. occur |
| Current operating rules | | 1671 | | 0 |
| RL without WWIR forecasts | 6.47 | 7.05 | 7.54 | 0 |
| RL with WWIR forecasts | 4.36 | 4.55 | 4.68 | 0 |
| RL with perfect WWIR forecasts | 4.0 | 4.0 | 4.0 | 0 |

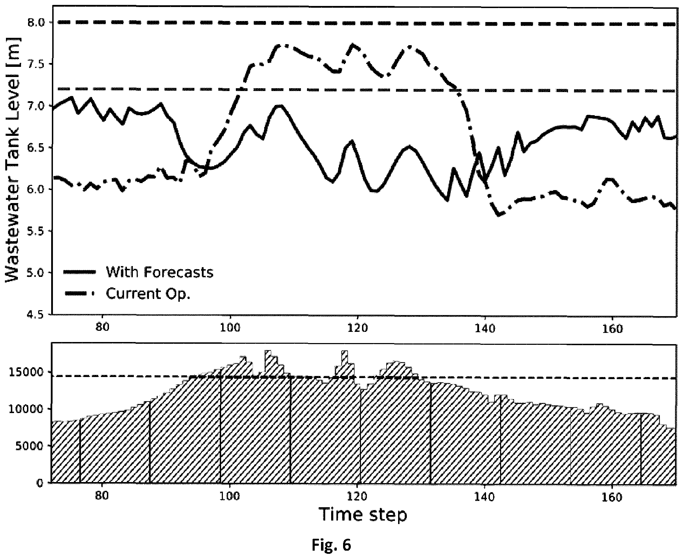

Providing a set of probabilistic forecasts to the RL agent adds the possibility to anticipate changes in the WWIR and adjust the pumping operation accordingly. Fig. 6 illustrates this capability. The top plot depicts the tank level for the scenarios of current operating rules and RL agent with WWIR forecasts; the bottom plot shows the observed WWIR. The control strategy operates at a tank level close to the first alarm trigger in order to optimize the electrical energy consumption, but when the forecasts show an expected increasing rate of WWIR the pumping activity is increased to provide a sufficient buffer to accommodate the expected increase of the tank level. In the current operating rules scenario, the control strategy is not quick enough to adapt to the changing rates and the first alarm is triggered during some time period.

Providing, to the control agent, a set of probabilistic forecasts of the wastewater intake rate (WWIR) for 20 time-steps ahead adds the possibility to anticipate changes in the WWIR and adjust the pumping operation accordingly. If the forecasts indicate an increase in WWIR for the following instants, the control agent will adapt the pumping set-point. Thus increasing, momentarily, the energy consumption but gaining enough buffer size to accommodate the incoming wastewater inflow and avoiding the overflow of wastewater. Figure 6 illustrates this capability. The top plot depicts the tank level for the scenarios of current operating rules and RL agent with WWIR forecasts; the bottom plot shows the observed WWIR. The control strategy operates at a tank level close to the first alarm trigger, in order to optimize the electrical energy consumption, but when the forecasts show an expected increasing rate of WWIR the pumping activity is increased to provide a sufficient buffer to accommodate the expected increase of the tank level. In the current operating rules scenario, the control strategy is not quick enough to adapt to the changing rates and the soft alarm is triggered during some time period.

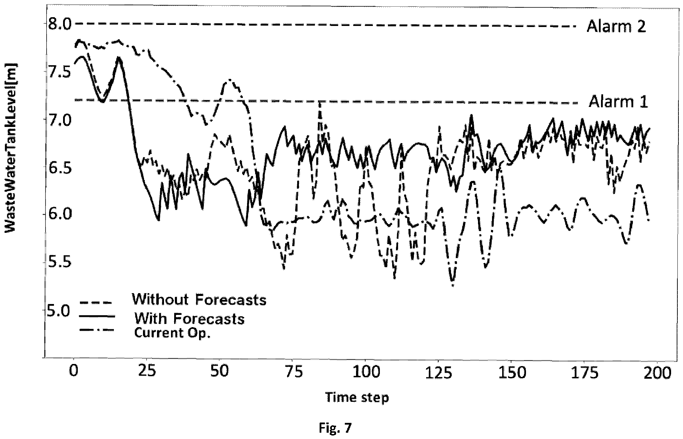

Despite the significant improvement in performance of the RL control strategy, in comparison with the benchmark operation, it was still unable to avoid a few alarms. However, some of these alarms occurred in unavoidable situations. After dividing the historical dataset into segments, some of the episodes start with the tank level already above the first alarm. In fact, four of the registered alarms occurred in the first and second steps of an episode, which are unavoidable for the control strategy (even with perfect WWIR forecasts). Fig. 7 depicts one of those situations where the starting tank level was already above the alarm trigger and therefore unavoidable. However, the RL agent was able to significantly reduce the amount of timesteps with tank above 7.2 meters.

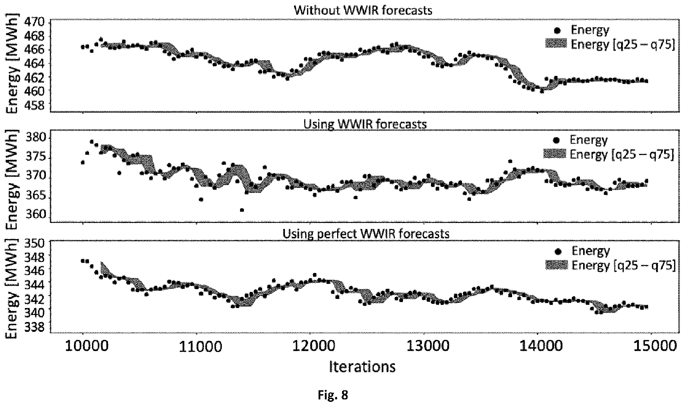

The following pertains to improvement in Electrical Energy Consumption. This section studies the ability of the proposed control strategy to reduce the electrical energy consumption of the WWPS process. Following the methodology presented in the previous section, Figure 8 depicts the comparison between the predictive and non-predictive RL control, while Table 19 shows the results for the absolute values of electrical energy consumption for the four scenarios under evaluation plus the improvement of the RL control in comparison with the current operating rules.

The results in Figure 8 show that the non-predictive control registered a cumulative energy consumption ranging between 459 MWh and 469 MWh, while the predictive control was able to operate with significantly less electrical energy needs, obtaining values between 362 MWh and 379 MWh. The scenario with WWIR perfect forecasts showed an electrical energy consumption between 340 MWh and 348 MWh.

From Table 3 it is possible to observe that the current operating rules required a cumulative electrical energy consumption of 379.8 MWh. In comparison, the non-predictive strategy required more 22% than the current operation, while using WWIR probabilistic forecasts as input resulted in an added value since the electrical energy needs reduced by almost 3%. It is important to underline that with perfect WWIR forecasts, the control strategy was able to achieve an improvement of 9.95%.

Table 3: Electrical energy consumption in the three scenarios: current operating rules, with and without WWIR forecasts.

| | Energy Consumption [MWh] | | | Improvement |
|---|---|---|---|---|
| | q25% | q50% | q75% | q50% |
| Current operating rules | | 379.8 | | - |
| RL without WWIR forecasts | 463.7 | 464.0 | 464.3 | -22.19% |
| RL with WWIR forecasts | 369.0 | 369.7 | 370.5 | 2.66% |
| RL with perfect WWIR forecasts | 342.0 | 342.32 | 342.57 | 9.95% |

The amount of energy consumption required to operate the WWPS has a direct relation with the average wastewater tank level, i.e. a higher level requires less power to pump the same amount of wastewater. Table 4 shows the average and standard deviation of wastewater tank level for the four scenarios under evaluation. As expected, with the WWIR forecast for the 20-steps ahead, the control strategy is able to operate the facility at almost more 30 cm higher than the current operation, justifying the electrical energy savings. Furthermore, the scenario with perfect WWIR forecasts obtained an average tank level of 6.58 m.

Table 4: Wastewater tank level in the three scenarios: current operating rules, with and without WWIR forecasts.

| | Wastewater level | |
|---|---|---|
| | mean [m] | std [m] |
| Current operating rules | 6.05 | 0.39 |
| RL without WWIR forecasts | 6.06 | 0.35 |
| RL with WWIR forecasts | 6.36 | 0.21 |
| RL with perfect WWIR forecasts | 6.58 | 0.15 |

The results show it is possible to observe the lower electrical energy needs of the RL strategy in comparison to the current operating rules. In the current operation scenario, the pumps are operated in order to keep the tank level around 6 meters, while the RL strategies are free to choose the optimal operation point. As a result, the strategy which uses WWIR forecasts is able to operate very close to the first alarm trigger in order to reduce the electrical energy use. The use of the forecasts provides the strategy with a snapshot of the following moments and allows operating closer to the alarm while maintaining the risk under control.

The following pertains to the trade-off between alarms and electrical energy consumption. As previously discussed, in the reward function the coefficients $c1$ and $c2$ represent the weight assigned to both objectives of the control strategy: alarms and electrical energy consumption reduction, respectively. In this section, the impact of changing these values is analyzed.

Two scenarios were considered:

**Scenario$^{alarms}$:** prioritizes the reduction on the number of alarms ($c1 = 1$; $c2 = 0.5$) and

**Scenario$^{energy}$** emphasizes the electrical energy consumption reduction ($c1 = 0.5$; $c2 = 1$)

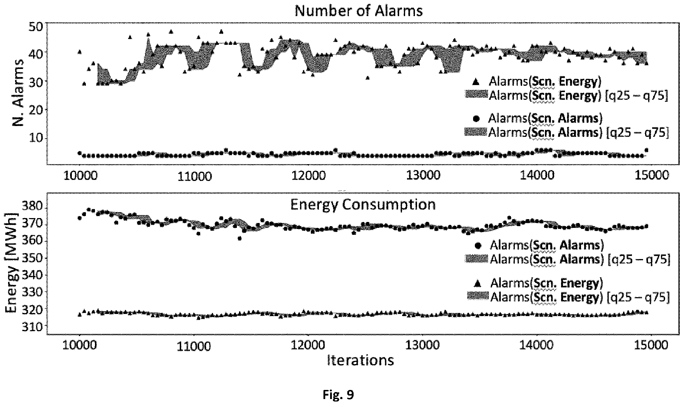

Figure 9 presents a comparison between the two scenarios. The top plot depicts the number of alarms and the energy consumption is presented in the bottom plot. In Scenario$^{alarms}$, the number of alarms is low, ranging between 4 and 7, while the other scenario reaches numbers between 29 and 48. By analyzing the electrical energy consumption, it is possible to detect a considerable difference between both scenarios, i.e. Scenario$^{alarms}$ has a energy consumption ranging from 366 MWh to 377 MWh, while Scenario$^{energy}$ shows between 315 MWh and 318 MWh.

Table 5 details the average values for alarms and electrical energy consumption for both scenarios and the current operating control rules, plus the improvement obtained with the RL control. As seen in Figure 9, Scenario$^{energy}$ obtains a lower energy consumption at the cost of more alarms. To put this increase in perspective, even with the record of more than 38 alarms, the Scenario$^{energy}$ lead to a decrease of almost 98% in the number of alarms when compared with the current operation. On the other hand, the energy consumption decreases almost 17% when compared with the current operating rules, while with the Scenario$^{alarms}$ the decrease was only 2.66%. Therefore, these results show that with the proposed methodology, significant reduction in electrical energy consumption can be obtained with a minor increase in the number of alarms. In all cases, the improvement in both criteria was obtained compared to the current operating rules.

Table 5: Comparison between the current operating rules and the two scenarios under evaluation: Scenario$_{alarms}$ and Scenario$_{energy}$.

| | Energy [MWh] | Alarms | Improvement | |
| --- | --- | --- | --- | --- |
| | | | Energy | Alarms |
| Scenario$^{alarms}$ | 369.7 | 4.55 | 2.66% | 99.73% |
| Scenario$^{energy}$ | 316.5 | 38.7 | 16.67% | 97.68% |
| Current operating rules | 379.8 | 1671 | - | - |

The term "comprising" whenever used in this document is intended to indicate the presence of stated features, integers, steps, components, but not to preclude the presence or addition of one or more other features, integers, steps, components or groups thereof. It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order. The disclosure should not be seen in any way restricted to the embodiments described and a person with ordinary skill in the art will foresee many possibilities to modifications thereof. The above described embodiments are combinable. The following claims further set out particular embodiments of the disclosure.

Acknowledgments: the research leading to this work is being carried out as a part of the InteGrid project, which received funding from the European Union's Horizon 2020 Framework Programme for Research and Innovation under grant agreement No. 731218. The sole responsibility for the content lies with the authors. It does not necessarily reflect the opinion of the Innovation and Networks Executive Agency (INEA) or the European Commission (EC). INEA or the EC are not responsible for any use that may be made of the information it contains.

**Claims**

1. Device for controlling a wastewater tank pumping system comprising a level input of the wastewater tank and one or more control pump outputs for controlling variable outflow pumps, and
an electronic data processor connected to said input and outputs, and configured for controlling said outflow pumps by executing a machine-learning reinforcement-learning method using probabilistic wastewater tank inflow rate and a pre-trained reinforcement-learning policy model for controlling one or more pump outputs, wherein
said reinforcement-learning policy model has been pre-trained by:
emulating the level of the wastewater tank using wastewater tank historical inflow rate and random initial wastewater tank level.

2. Device according to the previous claim wherein the historical inflow data and/or the level input of the wastewater tank are sampled in irregular time periods.

3. Device according to the previous claim wherein the historical inflow data and/or the level input of the wastewater tank are sampled in irregular time periods, during said pre-training of the reinforcement-learning policy model.

4. Device according to any of the previous claims wherein said pre-training of the reinforcement-learning policy model comprises a reinforcement-learning method for training a control policy using a policy gradient, alternating between sampling data through interaction with the emulated wastewater tank level and optimizing a surrogate objective function using stochastic gradient ascent.

5. Device according to the previous claim said pre-training of the reinforcement-learning policy model comprises a Proximal Policy Optimization, PPO, method.

6. Device according to the previous claim wherein the PPO method comprises using a Generalized Advantage Estimation, GAE, method as advantage estimator for the Proximal Policy Optimization, PPO, method.

7. Device according to any of the previous claims wherein the machine-learning reinforcement-learning method comprises a policy method having pre-trained reinforcement-learning policy model, said policy method comprising an artificial neural network method for inputting a state of the pumping system and for outputting a probability density function of the outflow pump variable set-point of each pump unit for sampling reinforcement-learning policy actions.

8. Device according to any of the previous claims wherein the wastewater tank is emulated using a state of the pumping system comprising: current wastewater tank level, pump on/off status, current wastewater tank inflow, current outflow and pump variable set-point.

9. Device according to the previous claim wherein the pre-training said reinforcement-learning policy model comprises using forecasts of wastewater tank inflow for a predetermined number of time periods ahead and sampling reinforcement-learning policy actions from outflow pump variable set-points for each individual pump.

10. Device according to the previous claim wherein the forecasts of wastewater tank inflow for a predetermined number of time periods ahead are probabilistic forecasts, in particular probabilistic forecasts of 25%, 50% and 75% quantiles.

11. Device according to any of the previous claims wherein the said pre-training of the reinforcement-learning policy model comprises a reward function comprising optimization terms for: a wastewater reservoir level term for operating with the tank level within predetermined admissible level limits, and a power consumption term for decreasing power consumption of the pumping system.

12. Device according to the previous claim wherein the said pre-training of the reinforcement-learning policy model further comprising a reward function comprising optimization term for: a pump variability term for avoiding intermittent on/off pump states and repeated adjusting of pump variable speed.

13. Device according to the previous claim wherein the reward function is given by

$$r_t = c_1 . r_{WWlevel_t} + c_2 . r_{power_t} + c_3 . r_{variability_t}$$

wherein $r_{WWlevel_t}$ is a positive predetermined value when the tank level is within predetermined admissible limits and is a negative predetermined value when the tank level is not within predetermined admissible limits;
wherein $r_{power_t}$ is a penalty value proportional to the power consumption of the pumping system;
wherein $r_{variability_t}$ is a penalty value proportional to change in outflow pump variable set-point;
wherein $c_1, c_2, c_3$ are adjustable weight coefficients for each term of the reward function.

14. Method for controlling a wastewater tank pumping system comprising a level input of the wastewater tank and one or more control pump outputs for controlling variable outflow pumps, and an electronic data processor connected to said input and outputs, and said method comprising:

controlling said outflow pumps by executing a machine-learning method using a pre-trained reinforcement-learning policy model and using probabilistic wastewater tank inflow rate and, and
previously pre-training said reinforcement-learning policy model by:
emulating the level of the wastewater tank using historical wastewater tank inflow rate and random initial wastewater tank level.

15. Non-transitory computer-readable storage medium including program instructions for implementing a device for controlling a wastewater tank pumping system, the program instructions including instructions executable by an electronic data processor to carry out the method of the previous claim.

Fig. 1

Fig. 2

**Physical System**

**Framework**

**Control Strategy Learning**

| SCADA |
|---|

Historical values:
- Reservoir level
- Pump power
- Pump frequency
- Intake / outflow
  Wastewater rate

| WWIR Forecasting |
|---|

| Episodes Creation |
|---|

| Environment Emulation |
|---|

Loop:
- Select Episode
- Pick action
- Environment interaction
- Store: state, action, reward, new state
- Policy update

Episodic train

Fig. 3

Physical
System

Framework

SCADA

- Reservoir level
- Pumps online
- Current pumps set point
- Current Waste Water
- Current Waste Water Intake
Rate

WWIR
Forecasting

Control
Algorithm

Wastewater Pump
Controller

Individual power set
points for each pump

Fig. 4

Fig. 5

Fig. 6

Fig. 7

Fig. 8

## Number of Alarms

## Energy Consumption

**Fig. 9**

Fig. 10

Historical
Dataset

Environment Emulation

Randomize Initial
tank water level

Tank water level

Sample an
action

Pump Power
↓
Wastewater Outflow

t = 0

Pump
set point

1

Waste water intake

Wastewater
(Intake – Outflow)
↓
Tank water level

2

t++          New water level

Fig. 11

Europäisches
Patentamt

European
Patent Office

Office européen
des brevets

## EUROPEAN SEARCH REPORT

Application Number

EP 19 16 8270

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MASOUD MAHOOTCHI ET AL: "Reservoir Operation Optimization by Reinforcement Learning", JOURNAL OF WATER MANAGEMENT MODELING, 1 January 2007 (2007-01-01), XP055661514, DOI: 10.14796/JWMM.R227-08 * the whole document * | 1-15 | INV. G06N3/08 F04D15/00 G06N3/00 G06N5/00 G06N20/20 ADD. G06N3/04 |
| A | XIUPENG WEI ET AL: "Short-term prediction of influent flow in wastewater treatment plant", STOCHASTIC ENVIRONMENTAL RESEARCH AND RISK ASSESSMENT, vol. 29, no. 1, 8 May 2014 (2014-05-08), pages 241-249, XP055661610, Berlin/Heidelberg ISSN: 1436-3240, DOI: 10.1007/s00477-014-0889-0 * the whole document * | 1-15 | |
| A,D | ZHANG ZIJUN ET AL: "Modeling and optimization of a wastewater pumping system with data-mining methods", APPLIED ENERGY, ELSEVIER SCIENCE PUBLISHERS, GB, vol. 164, 22 December 2015 (2015-12-22), pages 303-311, XP029386937, ISSN: 0306-2619, DOI: 10.1016/J.APENERGY.2015.11.061 * the whole document * | 1-15 | TECHNICAL FIELDS SEARCHED (IPC) G06N F04D |
| A,D | US 9 719 241 B2 (GRUNDFOS HOLDING AS [DK]) 1 August 2017 (2017-08-01) * the whole document * | 1-15 | |

-/--

The present search report has been drawn up for all claims

| Place of search | Date of completion of the search | Examiner |
|---|---|---|
| The Hague | 28 January 2020 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 19 16 8270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | G.T. COSTANZO ET AL: "Experimental analysis of data-driven control for a building heating system", CORR (ARXIV), vol. abs/1507.03638v1, 13 July 2015 (2015-07-13), pages 1-11, XP055283933, * the whole document * | 1-15 | |
| X,P | JORGE FILIPE ET AL: "Data-driven Predictive Energy Optimization in a Wastewater Pumping Station", ARXIV.ORG, CORNELL UNIVERSITY LIBRARY, 201 OLIN LIBRARY CORNELL UNIVERSITY ITHACA, NY 14853, 9 February 2019 (2019-02-09), XP081027214, * the whole document * | 1-15 | |

TECHNICAL FIELDS
SEARCHED        (IPC)

The present search report has been drawn up for all claims

| Place of search | Date of completion of the search | Examiner |
|---|---|---|
| The Hague | 28 January 2020 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 16 8270

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2020

| Patent document cited in search report | | Publication date | Patent family member(s) | | Publication date |
|---|---|---|---|---|---|
| US 9719241 | B2 | 01-08-2017 | CN | 103882938 A | 25-06-2014 |
| | | | EP | 2746477 A1 | 25-06-2014 |
| | | | US | 2014178211 A1 | 26-06-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9719241 B2

### Non-patent literature cited in the description

- **R. KOENKER ; G. BASSETT.** *Regression quantiles, Econometrica,* 1978, vol. 46, 33-50
- **J. H. FRIEDMAN.** Greedy function approximation: A gradient boosting machine. *Annals of Statistics*
- **S. B. TAIEB ; R. HUSER ; R. J. HYNDMAN ; M. G. GENTON.** Forecasting uncertainty in electricity smart meter data by boosting additive quantile regression. *IEEE Transactions on Smart Grid,* 2016, vol. 7, 2448-2455
- **J. SCHULMAN ; F. WOLSKI ; P. DHARIWAL ; A. RADFORD ; O. KLIMOV.** Proximal policy optimization algorithms. *arXiv:1707.06347 abs/1707.06347,* 2017
- **J. SCHULMAN ; P. MORITZ ; S. LEVINE ; M. I. JORDAN ; P. ABBEEL.** High-dimensional continuous control using generalized advantage estimation. *CoRR abs/1506.02438,* 2015
- **F. O. KEBIR ; M. DEMIRCI ; M. KARAASLAN ; E. UNAL ; F. DINCER ; H. T. ARATC.** Smart grid on energy efficiency application for wastewater treatment. *Environmental Progress & Sustainable Energy,* 2014, vol. 33, 556-563
- **Z. ZHANG ; A. KUSIAK ; Y. ZENG ; X. WEI.** Modeling and optimization of a wastewater pumping system with data-mining methods. *Applied Energy,* 2016, vol. 164, 303-311